# EUROPEAN PATENT APPLICATION

(11) **EP 4 446 926 A1**
(43) Date of publication of application: **16.10.2024**
(21) Application number: 24165761.8
(22) Date of filing: 25.03.2024
(51) Int. Cl.: G06F 21/64, H04L 9/00, H04W 12/63, H04W 4/02

(54) **LOCATION-BASED SYSTEMS AND TECHNIQUES FOR MINTING NON-FUNGIBLE TOKENS (NFTS)**

(30) Priority: 13.04.2023 US 202318300268
(71) Applicant: eBay Inc., San Jose, CA 95125 (US)
(72) Inventor: RUBINSON, Ethan Benjamin, San Jose, 95125 (US); CHALKLEY, Andrew, San Jose, 95125 (US)
(74) Representative: Müller-Boré & Partner Patentanwälte PartG mbB

(57) **Abstract**

Methods, systems, and computer storage media are provided for minting non-fungible tokens (NFTs) using one or more location verification devices. For example, a request to mint an NFT may be received from a user device. In embodiments, the request includes an event identifier associated with an event (e.g., a sporting event) and an event location. A public blockchain address can be identified based on the request to mint the NFT. Using location verification data associated with the location verification device, a location of the user device can be verified. For example, location verification data can be associated with at least one signal received from the user device. In some embodiments, the location verification data also corresponds to a user device communication with a base station. Accordingly, the NFT can be minted based on the public blockchain address and verifying the location of the user device.

## Description

### BACKGROUND

A non-fungible token (NFT) can be maintained using a distributed ledger system (e.g., a blockchain system). The blockchain is a type of distributed ledger technology that includes of a growing list of records - called blocks - that are securely linked together using cryptography. For example, distributed ledger technology may include a collection of replicated and synchronized data spread across multiple nodes in a peer-to-peer network that can record transactions (e.g., between two parties) in a verifiable way. Each node can replicate and save an identical copy of the data and independently update itself. Instead of record communication from a centralized authority, the nodes vote by a consensus algorithm on the correct copy.

### SUMMARY

Various aspects of the technology described herein generally relate to systems, methods, and computer storage media for, among other things, that provide for the minting of one or more non-fungible tokens (NFTs) using one or more location verification devices. For example, a minting management system (e.g., that communicates with the one or more location verification devices) can receive a request from a user device to mint an NFT. The request can include image data (e.g., which can also include animation data, video data, other types of image data), acoustic data, an event identifier (e.g., a unique ID, a barcode, a numerical sequence, one or more symbols, a text string, an alphanumerical sequence, another type of event identifier) associated with an event and an event location (e.g., a concert event located at an arena, a conference event located at a conference center) that is associated with the NFT, another type of NFT identifier, or one or more combinations thereof, and the like. In some embodiments, the request includes one or more user device identifiers (e.g., a media access control (MAC) address of the user device, a serial number, a Wi-Fi address identifier, a Bluetooth address identifier, an embedded identify document number, an international mobile equipment identity number, another type of user device identifier, or one or more combinations thereof), one or more application identifiers (e.g., associated with NFT minting), one or more network addresses, another type of identifier, or one or more combinations thereof, or the like.

Additionally, the minting management system can identify a public blockchain address (e.g., a unique code string for receipt of an electronic item, such as a minted NFT) based on the request to mint the NFT. For example, the public blockchain address can be identified using the image data, acoustic data, event identifier, the other type of NFT identifier, user device identifier, application identifier, network address, another type of identifier, or one or more combinations thereof, and the like. In some embodiments, the public blockchain address corresponds to a node on a public blockchain network. In some embodiments, the node is connected with other nodes via a peer-to-peer connection protocol. In some embodiments, the public blockchain address corresponds to a distributed ledger having a series of blocks that each reference at least one other block.

In addition, the minting management system can verify a location of the user device requesting the minting of the NFT based on location verification data received by one or more location verification devices of the minting management system. For example, the location verification data can be associated with at least one signal received, by at least one location verification device, from the user device. As another example, the location of the user device and a location of the location verification device can each correspond to the request to mint the NFT (e.g., both the location of the user device and the location of the location verification device can be associated with an event location that corresponds to the request). In yet another example, the location of the location verification device can be within a threshold distance of the location of the user device. In some embodiments, the location verification device is included within a plurality of location verification devices that include a plurality of beacons each affixed to a physical structure. Continuing this example, in some embodiments, each of the plurality of beacons are affixed at different physical structures at different physical locations, wherein each of the plurality of beacons is within a threshold distance from at least one other beacon of the plurality of beacons. Further continuing this example, the location of the user device can be verified based on each of the plurality of beacons receiving the location verification data from the user device. As such, the minting management system can mint the NFT based on the public blockchain address and based on verifying the location of the user device.

This Summary is provided to introduce a selection of concepts in a simplified form that are further described below in the Detailed Description. This Summary is not intended to identify key features or essential features of the claimed subject matter, nor is it intended to be an aid in determining the scope of the claimed subject matter.

### BRIEF DESCRIPTION OF THE DRAWINGS

The technology described herein is described in detail below with reference to the attached drawing figures, wherein:
FIG. 1 includes block diagrams of an example minting management system and an example minting management client, in accordance with aspects of the technology described herein;
FIG. 2 illustrates an example environment for minting an NFT using the minting management system and location verification devices of FIG. 1, in accordance with aspects of the technology described herein;
FIG. 3 illustrates another example environment for minting an NFT using the minting management system of FIG. 1 and a location verification device, in accordance with aspects of the technology described herein;
FIG. 4 is a block diagram of an example operations of the minting management system, minting management client, and location verification device, of FIGS. 1 and 4 in accordance with some implementations of the present disclosure;
FIG. 5 is a flow diagram showing an example method for minting an NFT based on verifying a location of a user device requesting the minting of the NFT, in accordance with some implementations of the present disclosure;
FIG. 6 is a block diagram illustrating an example system in accordance with some implementations of the present disclosure; and
FIG. 7 is a block diagram of an example computing environment suitable for use in implementing aspects of the technology described herein.

### DETAILED DESCRIPTION OF THE INVENTION

Blockchain technology uses a publicly, or semi-public, distributed ledger. The transactions on the blockchain can be viewed by other computing devices. The ability to view sequential transactions on a blockchain helps ensure the integrity of the transactions. Further, many nodes maintain copies of the blockchain, thus further aiding in the security benefits, since changing a transaction would require changing many copies at one time.

A non-fungible token (NFT) is a digital asset representation that can be written in a smart contract (e.g., a string of codes recorded in a decentralized ledger in the blockchain) and can be traded for a digital cryptocurrency. An NFT can be recorded on the blockchain, as well as subsequent ownership transmissions of the NFT. For example, NFT technology enables ownership of a digital asset (e.g., an image, song, avatar, animation) that can be traceable in the blockchain. NFTs are each unique, such that an individual NFT does not have an identical match in terms of an attribute (e.g., a shape, content of the NFT, an identifier of the NFT).

Some computing operations, computing components, and interfaces associated with NFT minting platform technologies are affected when an NFT is minted without verifying the purported location to which the NFT corresponds. For example, an image or video digital asset of a world wonder may instead be reproduction of another image or video, rather than an actual photograph taken at that particular location. As another example, an NFT minting request could include manipulated image data that is inconsistent with an identifier of the request, which would result in affecting the functioning of computing components associated with NFT digital assets as well. Minting an NFT corresponding to these examples would result in inauthentic and fake NFTs, deceived purchasers, mistrust in the marketplace, and additional stress on computing components (e.g., as a result of potential purchasers running excessive reverse image searches to safeguard against these inauthentic or fake NFTs).

To solve these problems, the technology described herein improves upon computing operations, computing components, and interfaces associated with NFT minting platform technologies by utilizing a location verification device, as well as a minting management system. For example, embodiments of the present invention relate to systems, methods, and computer storage media for, among other things, minting NFTs based on utilizing a location verification device (e.g., based on one or more wireless communications, such as a short-range wireless transmission for example, between the location verification device and a user device). In embodiments, the minting management system can include smart contract programming for minting the NFTs based on utilizing the location verification device. An NFT digital asset and authentication identifier (e.g., an integrated certificate of authenticity generated by the minting management system based on verifying the location of the user device) can be displayed on one or more user interfaces for a security and authentication mechanism.

At a high level, a minting management system supports improved minting of NFT digital assets (e.g., by using a plurality of location verification devices, by using a smart contract associated with the NFT digital asset). In particular, the minting management system can secure an NFT digital asset from fraud and counterfeiting. For example, a user device can request the minting of one or more NFTs. For example, the request for minting the NFT may correspond to image data of a particular location along the Dead Sea, the image data having metadata (e.g., associated with the user device and image features of the image, such as focal length, resolution, camera model, satellite-determined location, aperture). Further, a public blockchain address can be identified based on the request to mint the NFT. In addition, a location of the user device can be verified based on location verification data received by a location verification device (e.g., physically located within a threshold range of the salt island tree at the Dead Sea) having at least one sensor (e.g., an infrared sensor, a Bluetooth sensor), the location verification data being associated with at least one signal received by the location verification device from the user device that requested the minting of the Dead Sea photo). The minting management system can then mint the NFT digital asset corresponding to the Dead Sea photo, and can also support managing authentic presentations of the NFT digital asset via interfaces (e.g., the minting management system can also cause presentation of authentication identifiers of the NFT).

Furthermore, in this way, an item listing platform can provide a minting management system for performing operations associated with NFT digital assets or other digital assets. For example, the minting management system can also operate with legacy components (e.g., buyer interfaces and seller interfaces) of the item listing platform to provide legacy operations that are integrated into a smart-contract-based service of NFT minting. To illustrate, an item listing platform can support storing digital items or digital assets in item databases and providing a search system for receiving queries and identifying search result items based on the queries. An asset (e.g., physical asset or digital asset) refers to an item that is provided for listing on an item listing platform. Search systems support identifying, for received queries, result items from item databases. Item databases can specifically be for content platforms or item listing platforms such as EBAY content platform, developed by EBAY INC., of San Jose, California. An item listing platform may also provide a computing environment with features for managing collectible assets. For example, the item listing platform can provide asset management functionality to buy, sell, and trade culturally and historically significant collectible assets. The item listing platform can also support items (e.g., digital assets or non-fungible tokens - "NFTs") that are maintained using a blockchain system.

The minting management system can operate with a blockchain system to store a smart contract that includes programming for verifying the location of the minting requestor (e.g., the user device requesting to mint the NFT associated with the Dead Sea photo), or programming for verifying features of the NFT (e.g., verifying image features of the Dead Sea photo, such as by using the image metadata). The smart contract can be stored in combination with instructions or data (e.g., image metadata) that can be accessed when an NFT digital asset or authentication identifier (e.g., an integrated certificate of authenticity generated by the minting management system based on verifying the location of the user device) is retrieved to be presented via an interface. In some embodiments, the smart contract can also include a security mechanism (e.g., username and password; 2-factor authentication; public and private keys; crypto wallet-based authentication) to authorize display of the NFT digital asset.

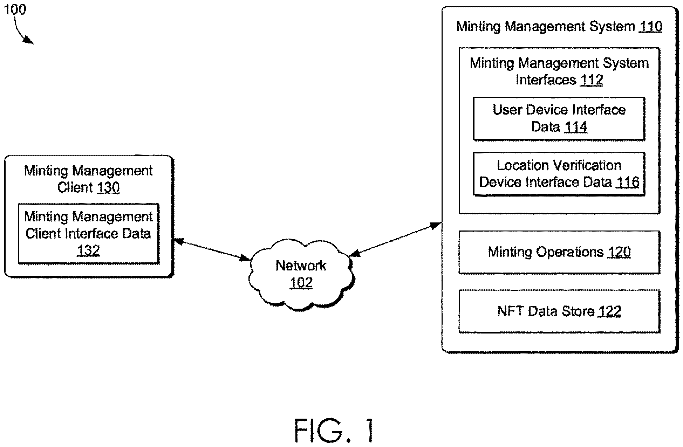

Aspects of the technical solution can be described by way of examples and with reference to FIGS. 1-8.

FIG. 1 illustrates an example operating environment 100 that includes network 102; minting management system 110 having minting management system interfaces 112 including user device interface data 114 and location verification device interface data 116, the minting management system 110 also including minting operations 120 and NFT data store 122; and minting management client 130 including minting management client interface data 132.

The minting management system 110 can communicate with minting management client 130 (e.g., a user device) that can access the minting management system 110, including the NFT data store 122 for example. In embodiments, a user - via the minting management client 130 - can communicate a request (e.g., a request to mint an NFT associated with a particular location, such as an amusement park, a sporting event, a waterfall, a religious monument) to perform minting operations 120 (e.g., receiving and analyzing location verification data); a request to access an NFT (e.g., an NFT minted via the minting management system 110); and a request to access an NFT identifier (e.g., an NFT token ID (an instance of a smart contract), a public blockchain address, another type of blockchain address, a certificate of authenticity generated by the minting management system 110). The requests can be associated with a user and one or more public blockchain addresses corresponding to the user, and the requests or portions thereof (e.g., an NFT identifier) can be stored at NFT data store 122.

A request to access an NFT can include a digital location of the NFT and security data that is associated with a security mechanism of a smart contract. The smart contract can use the security data to authorize viewing the NFT. In another example, a request to access an NFT can include the digital location of the NFT and no security data. The smart contract determines that no security data is communicated with the request and does not authorize viewing the NFT. It is contemplated that the contract address and NFT token ID - that includes a pointer to a crypto wallet - can be used for accessing an NFT for presentation via an item listing platform interface, a minting management client interface, or another interface. In addition, the item listing platform legacy components (e.g., the buyer interfaces and seller interfaces) can include a recommendation system and a payment system that are associated with the item listing platform for leveraging to perform minting operations 120 based on NFT digital assets, location verification devices, and smart contracts.

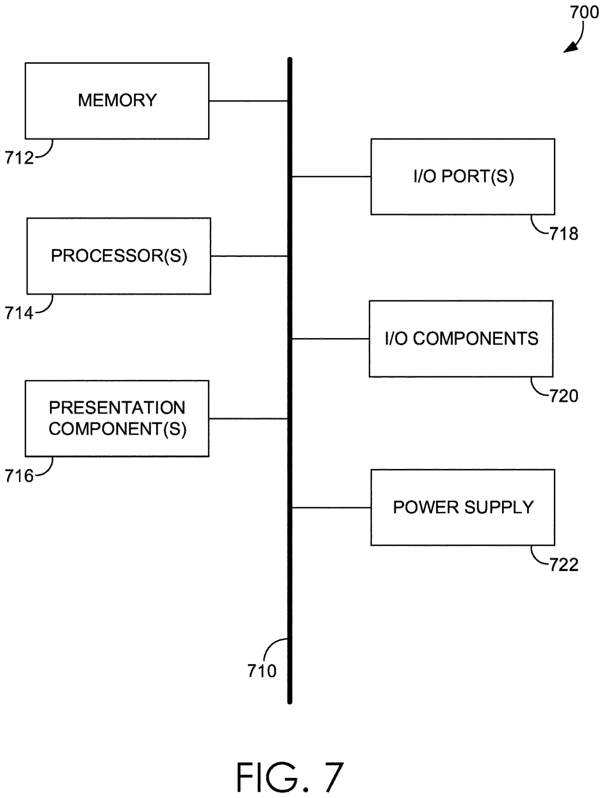

The minting management system 110 and minting management client 130 can provide interface data (i.e., minting management client interface data 132; user device interface data 114; and location verification device interface data 116) and operations (i.e., minting operations 120). The minting management system 110 and the minting management client 130 can operate in a server-client relationship to provide digital asset management services. For example, the minting management system 110 and the minting management client 130 can each include one or more servers, one or more computing devices (e.g., computing device 700 of FIG. 7), another type of device, or one or more combinations thereof. The NFT data store 122 can store historical minting operations of minting operations 120, data received by a user device, location verification data received by location verification devices, user device profiles associated with a minting management application, event profiles associated with the minting management application, user device location information, NFT identifiers, other types of minting management data, or one or more combinations thereof. Although example operating environment 100 depicts the NFT data store 122 as a single unit, the NFT data store 122 can be a distributed computing environment encompassing a plurality of computing components.

By way of example, the minting management client 130 can communicate, via network 102, a request to mint an NFT. The network 102 can be a local area network (LAN) or a wide area network (WAN), another wired or wireless network, or one or more combinations thereof. The network 102 may be the Internet, another public or private network, or one or more combinations thereof. The minting management client 130 and the minting management system 110 can each be connected to network 102 through one or more interfaces, such as by wired or wireless communication. The connections between each of minting management client 130 and the minting management system 110 with the network 102 can be a local, wide area, wired, or wireless network, a separate public or private network, or one or more combinations thereof.

The request to mint the NFT can include image data (e.g., image metadata, animation data, video data, other types of image data or metadata) acoustic data (e.g., longitudinal sound waves, mechanical waves), or another type of NFT data associated with a particular location in which a location verification device is positioned. For example, the request to mint the NFT can correspond to a video captured by a user device at concert event having one or more location verification devices affixed throughout the concert location (e.g., an indoor stadium, an outdoor venue). Continuing the example, this request communicated to the minting management client 130 via network 102 can include video data, such as video metadata (e.g., megapixels, header data, color components, file size, bits per sample), one or more network addresses associated with the user device and the network 102, one or more user device identifiers of the requestor (e.g., a media access control (MAC) address of the user device, a serial number, an embedded identify document number, an international mobile equipment identity number), or one or more combinations thereof. The request to mint the NFT, or one or more portions of the request, can be stored at the NFT data store 122.

In some embodiments, the minting management system 110 receives the request to mint the NFT based on one or more of a user device profile associated with a minting management application of the minting management system 110 and an event profile associated with the minting management application. For example, the concert event can have a concert event profile that indicates a time period and one or more dates for the concert event. Further, the concert event profile can include one or more locations of the concert event (e.g., one or more geospatial coordinates, latitude, longitude, altitude, a geocode or another type of address). In some embodiments, the concert event profile includes a plurality of photos or videos captured by one or more image or video capturing devices (e.g., a user device, video production equipment) at the concert event location (e.g., during or before the concert event). For example, the minting management system 110 can receive these images or videos via the minting management client 130. Additionally, the concert event profile can also include location verification device profiles for each of the location verification devices physically located at the concert event. For example, the location verification device profiles can include a serial number of the location verification device, location and positioning data of the location verification device, software data associated with the location verification device, sensor data of the location verification device (e.g., Bluetooth sensor data, infrared sensor data, radio frequency identification (RFID) sensor data, Wi-Fi access point data, active or passive sensor data, solar-powered sensor data, sensor calibration data, sensor sensitivity data, another type of sensor data, or one or more combinations thereof), other types of location verification device profile data, or one or more combinations thereof. Each of the profiles of the minting management application can be stored at the NFT data store 122.

In some embodiments, the request to mint the NFT, which corresponds to a physical location, can include an event identifier or a physical location identifier (e.g., a unique ID, a barcode, a numerical sequence, one or more symbols, a text string, an alphanumerical sequence, another type of event or location identifier). For example, the event identifier can refer to a sporting event or a conference event located at a conference center. As another example, the physical location identifier can refer to the Great Pyramid of Giza or the Great Egyptian Museum on the Giza Plateau. In yet another example, the event location identifier can refer to a particular Orthodox Easter event in a particular church. Further, in some embodiments, the request to mint the NFT includes one or more user device identifiers (e.g., a media access control (MAC) address of the user device, a serial number), one or more application identifiers associated with one or more profiles of a particular minting management application of the minting management system 110, or one or more combinations thereof. Each of the event identifier, physical location identifier, user device identifier, and application identifier can be stored at the NFT data store 122.

Based on receiving the request to mint the NFT, the minting management system 110 can identify a public blockchain address. For example, the public blockchain address can be associated with a particular user. In embodiments, the public blockchain address is identified based on a user device identifier associated with the request, an application identifier (e.g., the minting management application having the user device profile stored at NFT data store 122), or one or more combinations thereof. Further, the public blockchain address can be used for the minting operations 120.

In embodiments, the minting operations 120 include verifying a location of a user device associated with the request to mint the NFT. For example, the location of the user device can be verified based on location verification data, received by the minting management system 110, the location verification data being associated with at least one communication between the user device and at least one location verification device (e.g., a signal received by the location verification device from the user device). In addition, the location of the location verification device and the location of the user device can both correspond to the request to mint the NFT. For example, the request may include an event identifier associated with a location of the event, and the location of the location verification device and the location of the user device can each be within an area within the location of the event. In some embodiments, the location verification device is affixed to a structure (e.g., a wall, a pole) within the location of the event. In some embodiments, the location verification device is affixed to a drone or other mobile vehicle. Further, in some embodiments, the location of the user device is within a threshold distance of the location of the location verification device, and the location verification data is received based on the location of the user device being within the threshold distance.

In addition, in some embodiments, the location of the user device is verified based on metadata of the image data being within a duration of the event, metadata of the animation data being within the duration of the event, metadata of the video data being within the duration of the event, acoustic metadata data being captured within the duration of the event, or another type of NFT data being within the duration of the event. For example, the duration of a chorus event may be one hour on a particular day, and the associated metadata corresponding to the request may indicate that the photo, video, animation, recorded acoustics, or other type of digital asset was captured during the duration of the chorus event. In some embodiments, the location of the user device can be verified based on a verification that the image, video, animation, acoustic recording, or another type of digital asset, was captured by the user device that requested the minting of the NFT. For example, the minting management system 110 can verify that the digital asset (e.g., the image) includes a background that corresponds to the location of the location verification device. In embodiments, the background of the digital asset (e.g., the image captured by the user device) can be compared to a plurality of images captured at the location of the location verification device (e.g., by one or more other user device, by video production equipment). In some embodiments, the background can be compared to images within an event profile (e.g., the profile including photos or videos captured at the event location). As another example, the minting management system 110 can verify that the associated metadata indicates that the digital asset (e.g., image) was captured by the user device (e.g., location metadata, date and time metadata).

In addition, in some embodiments, the location of the user device is verified based on a media access control (MAC) address of the user device, a public blockchain address associated with the user of the user device, or one or more combinations thereof. For example, the location of the user device can be verified based on the user device registering with a computer application (e.g., a minting management application of the minting management system 110) using the MAC address of the user device, a serial number of the user device, an embedded identify document number of the user device, an international mobile equipment identity number of the user device, the public blockchain address, or one or more combinations thereof, or the like. In some embodiments, the location of the user device can be verified based on one or more profiles (e.g., the event profile, user device profile, location verification device profile) corresponding to the minting management application of the minting management system 110.

In some embodiments, the location of the user device is verified based on using one or more location verification devices and one or more base stations (e.g., a macro cell, a small cell, a micro cell, a femtocell, a relay). As an example, the user device location can be verified based on positioning techniques (e.g., round trip time based positioning, time difference of arrival based positioning, uplink angle of arrival based positioning, or one or more combinations thereof) performed by one or more base stations. In embodiments, a positioning technique may include a positioning reference signal transmitted by the base station and a reference signal transmitted by the user device based on the user device receiving the positioning reference signal from the base station. As another example, the user device location can be verified based on one or more base station processors performing a triangulation technique (e.g., the technique based on the location of the base station). In embodiments, the triangulation technique can be based on angle of arrival measurements relative to a global reference frame. In some embodiments, the triangulation technique can be based on multilateration using differential angle of arrival measurements without a global reference frame. In some embodiments, the minting management system 110 receives (from the base station) and analyzes one or more of the sensor measurements, angle of arrival measurements, differential angle of arrival measurements, round trip signal propagation time measurements, or one or more combinations thereof, for verifying the location of the user device.

The minting management system 110 can mint the NFT based on verifying the location of the user device and the public blockchain address. In embodiments, the NFT is minted based on the location of the user device relative to the location verification device (e.g., which can be reflected in the certificate of authenticity generated by the minting management system 110). Additionally, in some embodiments, the NFT is minted based on verifying the image (or video, for example) was captured by the user device (e.g., based on comparing the background with other backgrounds of images or videos captured by one or more other user devices within a threshold distance of the location verification device). In embodiments, the NFT can be minted based on the one or more of the sensor measurements, angle of arrival measurements, differential angle of arrival measurements, round trip signal propagation time measurements, another type of positioning measurement, or one or more combinations thereof, received from the one or more base stations.

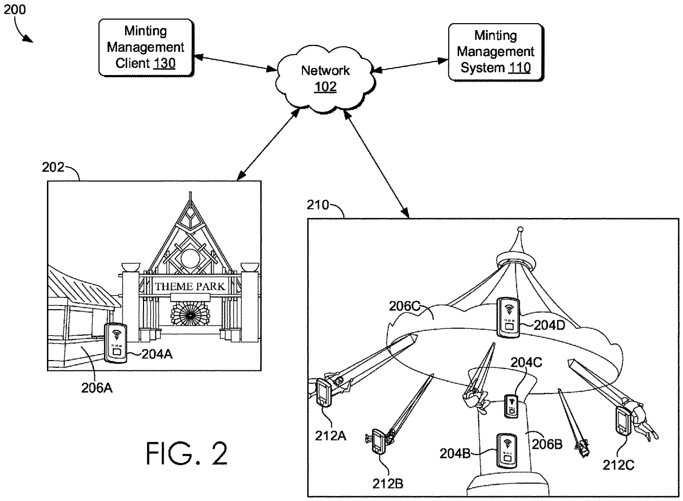

FIG. 2 illustrates an example environment 200 for minting an NFT. Example environment 200 includes network 102; minting management system 110; minting management client 130; a first physical location 202 (e.g., a theme park entrance) having a location verification device 204A affixed to a structure 206A; and a second physical location 210 (e.g., an amusement ride location) having location verification devices 204B and 204C affixed at different physical locations on structure 206B, location verification device 204D affixed to structure 206C, and user devices 212A, 212B, and 212C.

In embodiments, the minting management system 110 receives a request to mint an NFT from a user device (e.g., 212A). In an embodiment, the request is communicated to the minting management system 110 via the minting management client 130. For example, the request can include a location identifier corresponding to the second physical location 210 (e.g., an amusement ride location). Based on receiving the request, the minting management system 110 identifies a public blockchain address corresponding to a user of the user device 212A. In an embodiment, the minting management system 110 communicates with one or more of the location verification devices 204B, 204C, and 204D via network 102 to verify the location of the user device 212A at the second physical location 210 (e.g., an amusement ride location). For example, location verification device 204C can transmit location verification data to the minting management system 110, the location verification data corresponding to at least one signal transmitted between the location verification device 204C and the user device 212A.

In embodiments, the location verification devices 204A, 204B, 204C, and 204D may include one or more motion sensors (e.g., an infrared sensor and signal processor), a global positioning system, a global navigation satellite system, a Wi-Fi access point, an RFID sensor, a beacon (e.g., a Bluetooth low energy beacon), a light detection and ranging sensor, a camera, a depth sensor, a time-of-flight sensor, another type of sensor, or one or more combinations thereof. In embodiments, the location verification data can include one or more of accelerometer data (e.g., transmitted from user device 212A to location verification device 204C), gyroscope data (e.g., transmitted from user device 212A to location verification device 204C), movement data (e.g., obtained by the motion sensor of the location verification device 204C), other infrared data, GPS data from the GPS sensor of the user device 212A or the location verification device 204C, other sensor data from another sensor of the location verification device 204C, or one or more combinations thereof.

In an embodiment, the location verification device 204B includes a motion sensor having an infrared sensor and signal processor, and the minting management system 110 verifies the location of the user device 212A based on processing, via one or more movement algorithms, movement data detected by the infrared sensor that was processed by the signal processor of the location verification device 204B. In some embodiments, the minting management system 110 utilizes the one or more movement algorithms to additionally analyze the gyroscope data, video data captured by the location verification device 204B, depth sensor data captured by the location verification device 204B, time-of-flight sensor data captured by the location verification device 204B, or one or more combinations thereof, to verify the location of the user device 212A. For example, the video data, depth sensor data, or time-of-flight sensor data may be captured by the location verification device 204B based on the user device 212A being within a threshold distance from the location verification device. 204B. Additionally or alternatively, the minting management system 110 verifies the location of the user device 212A based on receiving the location verification data including user device 212A accelerometer data (e.g., received by location verification device 204B) and analyzing the accelerometer data using the one or more movement algorithms. In some embodiments, the one or more movement algorithms include an object recognition algorithm, a segmentation algorithm (e.g., for analyzing a frame within a video captured by the location verification device 204B), another type of algorithm, or one or more combinations thereof.

In some embodiments, the minting management system 110 additionally verifies the location of the user device 212A at the second physical location 210 (e.g., an amusement ride location) based on comparing the background of an image or video (or an object within the image or video captured by the user device 212A) with a background of images or videos (or an object within the images or videos) captured by the user devices 212B and 212C (or captured by the other location verification devices 204C and 204D). In an embodiment, the images or videos captured by the user devices 212B and 212C, which are used for comparison with the image or video captured by user device 212A, were each verified by the minting management system 110 based on metadata of the images or videos. Additionally or alternatively, the images or videos captured by the user devices 212B and 212C were each verified by the minting management system 110 based on one or more signals between at least one of the location verification devices 204B, 204C, and 204D and each of the user devices 212B and 212C. In an embodiment, the minting management system 110 verifies the location of a user device at the first physical location 202 (e.g., a theme park entrance) based on comparing the background of an image or video (or an object within the image or video captured by the user device) with a background of images or videos (or an object within the images or videos) captured by the location verification device 204A.

In an embodiment, the location verification devices 204B, 204C, and 204D each include a beacon, wherein each of the beacons affixed to their respective structure are within a threshold distance from at least one other beacon. Continuing the example, the minting management system 110 can verify the location of one or more of user devices 212A, 212B, and 212C based on receiving location verification data from a threshold number of the location verification devices 204B, 204C, and 204D. In one embodiment, the threshold number of the location verification devices is based on the total number of beacons and the distance between each of the beacons receiving the location verification data. In another embodiment, the threshold number of the location verification devices is based on the total number of beacons and the distance between each of the location verification devices that have not received the location verification data and the beacon receiving the location verification data.

In embodiments, the minting management system 110 can mint the NFT based on verifying the location of a user device (e.g., user devices 212A, 212B, 212C, or one or more combinations thereof) and based on the minting management system 110 identifying the public blockchain address from the request to mint the NFT. In an embodiment, an NFT is minted based on the location of the user device relative to the location verification device (e.g., location verification device 204A, 204B, 204C, 204D, or one or more combinations thereof). Additionally, in some embodiments, the NFT is minted based on utilizing one or more movement algorithms to analyze the movement data captured by one or more of the location verification devices, the gyroscope data from the respective user device, video data captured by a location verification device, depth sensor data captured by a location verification device, time-of-flight sensor data captured by a location verification device, or one or more combinations thereof. In some embodiments, the NFT is minted based on the minting management system 110 receiving location verification data from the threshold number of the location verification devices.

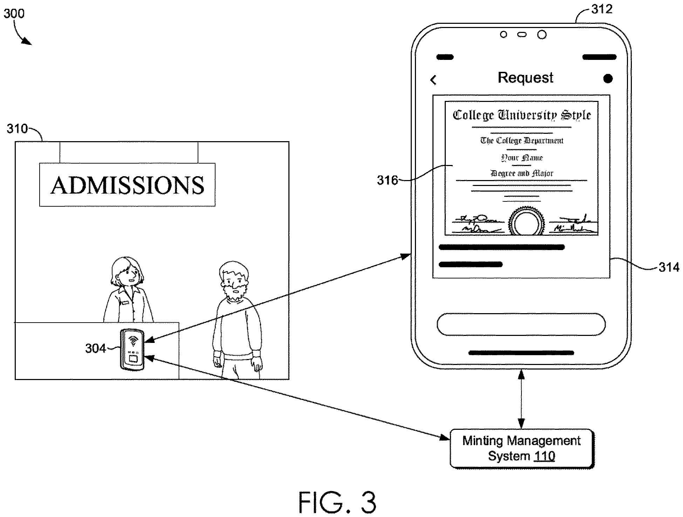

FIG. 3 illustrates an example environment 300 for minting an NFT. Example environment 300 includes minting management system 110 that is configured to communicate with location verification device 304 and user device 312. The location verification device 304 is also capable of communicating with the user device 312 (e.g., for transmitting or receiving at least one signal to or from the user device). The location verification device 304 is affixed to structure 306 within the physical location 310 (e.g., a university admissions office location). The user device 312, which is also located within the physical location 310 (e.g., a university admissions office location), has a user interface 314 and image 316 (e.g., an image of a university degree) that the user device has requested to mint as an NFT.

In an embodiment, the user device 312 transmits a request to mint image 316 (e.g., an image of a university degree) to the minting management system 110. In an embodiment, the request includes image data associated with the image 316 (e.g., an image of a university degree) and an identifier associated with the physical location 310 (e.g., a university admissions office location). For example, the request can include geospatial coordinates of the location in which the image was captured by user device 312. Based on the request, the minting management system 110 can identify a public blockchain address (e.g., the public blockchain address corresponding to a node on a public blockchain network) associated with the user device 312 or a user of the user device 312. In an embodiment, the request is associated with a user device profile of a minting management application of the minting management system 110, the minting management application being downloaded onto the user device 312, wherein the minting management system 110 can identify the public blockchain address based on the user device profile.

In embodiments, the minting management system 110 verifies the location of the user device 312 at the physical location 310 (e.g., a university admissions office location) based on one or more signals between the user device 312 and the location verification device 304 affixed to structure 306 within the physical location 310 (e.g., a university admissions office location). For example, the location verification device 304 can include a beacon, a Bluetooth sensor, an RFID sensor, another type of sensor, or one or more combinations thereof, for the one or more signals between the user device 312 and the location verification device 304. In an embodiment, the location of the user device 312 is verified based on the user device 312 being within a threshold distance of the location verification device 304 within the physical location 310 (e.g., a university admissions office location). Additionally, the location of the user device 312 can be further verified based on metadata of the image 316 (e.g., an image of a university degree) being within a duration of a scheduled appointment at the physical location 310 (e.g., a university admissions office location). For example, the minting management system 110 can receive scheduled appointment data (e.g., from a server managing electronic appointments between the physical location 310 (e.g., a university admissions office location) and user devices). In some embodiments, the scheduled appointment data is uploaded onto the minting management application of the minting management system 110 (e.g., the minting management application can include a university admissions office profile that includes the appointment data). In this example, the minting management system 110 can compare image metadata of the image 316 (e.g., an image of a university degree) with the appointment data of the university admissions office profile to further verify the location of the user device 312 within the physical location 310 (e.g., a university admissions office location).

In embodiments, the location verification device 304 is included within a plurality of location verification devices that also includes an indoor small cell base station that is located within the physical location 310 (e.g., a university admissions office location). For example, the minting management system 110 can additionally verify the location of the user device 312 based on the small cell performing an indoor positioning technique. In an embodiment, the indoor positioning technique is based on one or more round trip times or one or more time of flights between the user device 312 and the indoor small cell base station. In some embodiments, the location verification device 304 includes one or more Wi-Fi access points, one or more ultra wide band transceivers, another type of radio frequency transceiver, or one or more combinations thereof, for generating location verification data for the minting management system 110 to verify the location of the user device (e.g., based on one or more Wi-Fi signals between the user device 312 and the location verification device 304, one or more ultra wide band signals between the user device 312 and the location verification device 304).

In embodiments, the NFT corresponding to the image 316 (e.g., the degree image including the name of the user of user device 312) is minted by minting management system 110 based on the location of the user device 312 relative to the location verification device 304. In an embodiment, the minting management system 110 mints the NFT further based on comparing the name of the user of user device 312 (e.g., using a user device identifier) with the name on the image 316 (e.g., an image of a university degree). In some embodiments, image metadata or optical character recognition can be used for the comparing for an additional authentication measure. For example, the certification of authentication generated by minting management system 110 can reflect this additional authentication measure, which can be displayed upon a user interface. As another example, the minting management system 110 can also compare the user device profile corresponding to the minting management application with the image 316 (e.g., by using optical character recognition on the degree image).

### Example Diagrams

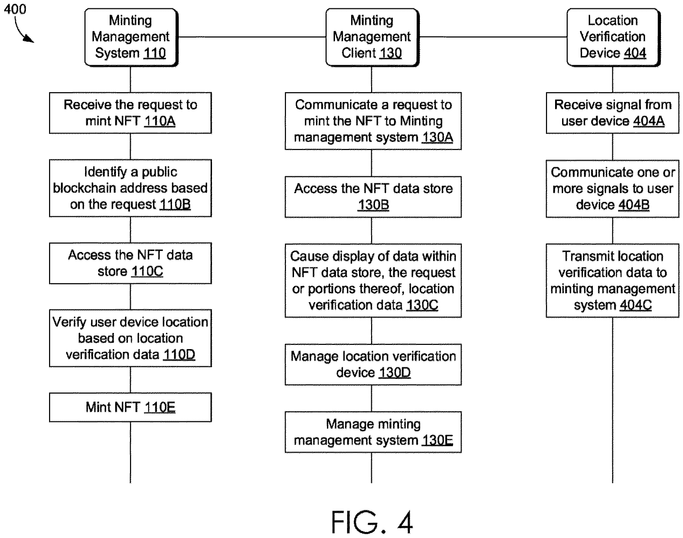

FIG. 4 depicts block diagram 400 including example operations of the minting management system 110, the minting management client 130, and the location verification device 404. At block 110A, the minting management system 110 receives a request to mint an NFT (e.g., from a user device). At block 110B, the minting management system 110 identifies a public blockchain address (e.g., associated with the user device that requested to mint the NFT). For example, the minting management system 110 can access the NFT data store at block 110C for identifying the public blockchain address. At block 110D, the minting management system 110 can verify the user device location based on location verification data. For example, the minting management system 110 can receive the location verification data from the location verification device 404. In some embodiments, the minting management system 110 can also receive location verification data from the user device (e.g., geospatial coordinates). In some embodiments, the minting management system 110 can access the NFT data store for further verification of the location of the user device. For example, the minting management system 110 can access images stored at the NFT data store to compare an image associated with the request to mint the NFT, wherein the images stored at the NFT data store were captured by other image capturing devices (e.g., other user devices, cameras) at the location associated with the image for minting. At block 110E, the NFT is minted based on verifying the location of the user device and the public blockchain address identified. In some embodiments, the minting management system 110 stores a certification of authentication for the minted NFT at the NFT data store.

At block 130A, the minting management client 130 communicates the request to mint the NFT (e.g., from the user device) to the minting management system 110. At block 130B, the minting management client 130 accesses the NFT data store. For example, the minting management client 130 can access historical minting operations of the minting management system 110, a certificate of authentication of a minted NFT, profiles stored at the minting management application, other types of NFT data, or one or more combinations thereof. At block 130C, the minting management client 130 can cause a user interface to display NFT data within the NFT data store, such as the certificate of authentication for example. At block 130D, the minting management client 130 can manage location verification devices. For example, the minting management client 130 can trigger a Wi-Fi access point of the location verification device 404 or instruct a Bluetooth sensor of the location verification device 404 to listen for a particular duration or interval. As another example, the minting management client 130 can instruct one or more sensors to listen for longer durations during a particular event duration. In some embodiments, the minting management client 130 can trigger a sleep mode for the location verification device 404 (e.g., during hours in which a location is closed). At block 130E, the minting management client 130 can manage the minting management system 110. For example, the minting management client 130 can instruct the minting management system 110 to verify the location of the user device based on location verification data and particular NFT data stored within the NFT data store.

At block 404A, the location verification device 404 can receive a signal from a user device. For example, the location verification device 404 can receive the signal from the Bluetooth sensor, RFID sensor, Wi-Fi access point, another type of location verification device sensor, or one or more combinations thereof. In some embodiments, the location verification device 404 receives accelerometer data, gyroscope data, satellite data, other location data, or one or more combinations thereof, from the user device. At block 404B, the location verification device 404 communicates one or more signals to the user device. For example, the location verification device 404 can transmit signals from the Wi-Fi access point and receive signals from the user device based on the transmitted signals. In some embodiments, the location verification device 404 can transmit a light detection and ranging signal (e.g., a 1064 nm wavelength) at the user device. In some embodiments, the location verification device 404 can transmit infrared signals or soundwave signals at the user device. At block 404C, the location verification device 404 can transmit location verification data to the minting management system 110. For example, location verification data may include one or more of one or more of accelerometer data, gyroscope data, movement data, other infrared data, satellite data, light detection and ranging data, round trip time data, time of flight data, other sensor data, or one or more combinations thereof.

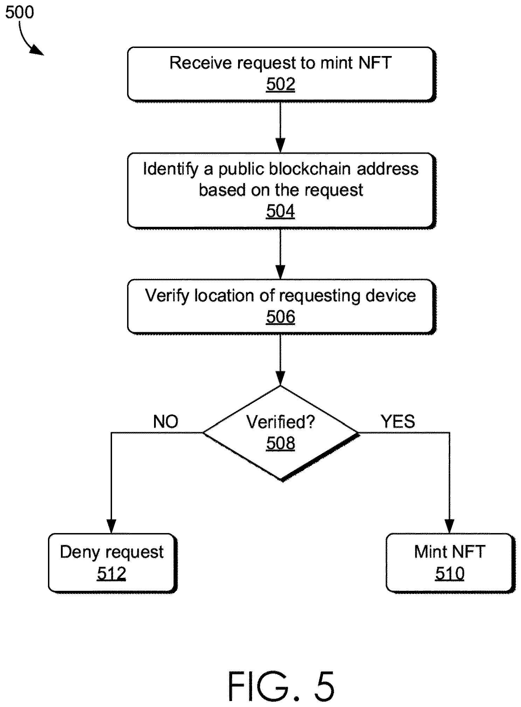

With reference to FIG. 5, flow diagram 500 illustrates a method for minting an NFT based on verifying a location of a user device requesting the minting of the NFT. In embodiments, one or more computer-storage media having computer-executable or computer-useable instructions embodied thereon that, when executed, by one or more processors can cause the one or more processors to perform the methods (e.g., computer implemented method) in a computerized system or computer system. At step 502, a request to mint an NFT is received by a minting management system from a user device. In some embodiments, the request is communicated to the minting management system by a minting management client. In embodiments, the request includes an event identifier associated with an event and an event location. In some embodiments, the request includes image data or video data. At step 504, a public blockchain address is identified based on the request. In embodiments, the public blockchain address is identified based on one or more of a MAC address of the user device, a serial number of the user device, a Wi-Fi address identifier associated with the user device, a Bluetooth address identifier corresponding to the user device, a crypto-wallet associated with the user device, an embedded identify document number of the user device, an international mobile equipment identity number of the user device, another type of user device identifier, or one or more combinations thereof.

At step 506, a location of the requesting device is verified. For example, a location of the user device requesting to mint the NFT can be verified based on location verification data received by a location verification device. The location verification data can be associated with at least one signal received by the location verification device from the user device (or vice versa), and the location of the user device and a location of the location verification device can each corresponding to the request to mint the NFT. In some embodiments, the location verification device is included within a plurality of location verification devices including a plurality of beacons affixed to one or more structures at a plurality of physical locations. For example, each of the plurality of beacons can be within a threshold distance from at least one other beacon of the plurality of beacons. Additionally, the location of the user device can be verified based on receiving the location verification data from a threshold number of the plurality of beacons.

In some embodiments, an image associated with the request can be verified as being captured by the user device based on metadata of the image. Additionally, the image can be verified as being captured by the user device by comparing a background of the image to a plurality of images captured at the location of the location verification device. For example, in some embodiments, the plurality of images captured at the location of the location verification device were captured by other user devices, and each of the plurality of images were verified based on metadata of each of the plurality of images. In some embodiments, the location verification device is included within a plurality of location verification devices including a beacon affixed to a structure and a base station, and the location of the user device is verified based on receiving the location verification data from the beacon and the base station. In some embodiments, verifying the location of the user device is based on one or more base station processors performing a triangulation technique based on a location of the base station. In some embodiments, verifying the location of the user device is based on the user device being within a threshold distance of the event location and based on metadata of the image data being within a duration of the event (e.g., the event associated with the request that includes the event identifier).

In some embodiments, the location verification device includes a motion sensor having an infrared sensor and signal processor, and the location verification data includes user device accelerometer data. In this embodiment, verifying the location of the user device can include processing, via one or more movement algorithms, the user device accelerometer data and movement data detected by the infrared sensor that was processed by the signal processor. In some embodiments, the location verification device is included within a plurality of location verification devices including a plurality of beacons that are each affixed to a different structure at different physical locations, and each of the plurality of beacons are within a threshold distance from at least one other beacon of the plurality of beacons. In this embodiment, the location of the user device can be verified based on each of the plurality of beacons receiving the location verification data from the user device.

In some embodiments, the NFT includes video data captured by the user device, and the video data is verified as being captured by the user device based on metadata of the video data. In this embodiment, the video data can also be verified as being captured by the user device by comparing the video data corresponding to a background with other video data of the background captured by other user devices, wherein the location verification device verified locations of the other user devices, and the verifications of the other user devices are associated with the other video data. In some embodiments, verifying the location of the user device is based on the user device registering with a computer application using a media access control (MAC) address of the user device and the public blockchain address. In some embodiments, the NFT corresponds to video data captured by the user device, and the location of the user device is verified based on metadata of the video data being within a duration of the event.

In some embodiments, the request includes an event identifier associated with an event and an event location. In addition, the location verification device can be included within a plurality of location verification devices including a beacon and a small cell having a location within the event location. Further, the location of the user device can be verified based on the small cell performing an indoor positioning technique. In some embodiments, the NFT can correspond to image data captured by the user device, and the location of the user device can be verified based on metadata of the image data being within a duration of the event. In some embodiments, the location verification device includes a motion sensor having an infrared sensor, and the location of the user device is verified based on movement data of a user of the user device detected by the infrared sensor. In some embodiments, the location verification device is included within a plurality of location verification devices that also include a base station, and wherein verifying the location of the user device is based on positioning techniques performed by the base station.

At step 508, if the location of the user device is verified, the NFT is minted at 510. If the location of the user device is not verified, then at step 512, the request to mint the NFT is denied. For example, the request can also be denied based on comparing image data captured by the user device requesting to mint the NFT to image data captured by the location verification device or captured by other user devices and verified using the location verification device.

### Technical Improvement

Embodiments of the present invention have been described with reference to several inventive features (e.g., operations, systems, engines, and components) associated with an item listing platform system. Inventive features described include: operations, interfaces, data structures, and arrangements of computing resources associated with providing the functionality described herein relative with reference to a minting management system.

Embodiments of the present invention relate to the field of computing, and more particularly to the management of NFT digital assets. The following described exemplary embodiments provide a system, method, and program product to, among other things, execute digital asset minting management operations that provide secure NFT digital assets associated with various verification techniques. Therefore, the present embodiments have the capacity to improve the technical field of item listing platform technology by providing more secure computing operations. For example, the ordered combination of security steps described for this technical solution provide a specific improvement over prior systems, resulting in an improved security for minting systems and other operations associated with NFT digital assets. In particular, the particular ordered combination of steps associated with NFT digital assets do not use conventional methods. The technical solution addresses conventional minting platforms that lack the minting management of NFT digital assets based on improving these technologies by the combination of functions for securing NFT digital assets.

Functionality of the embodiments of the present invention have further been described, by way of an implementation and anecdotal examples - to demonstrate that the operations for providing a minting management system and other technical functions as a solution to a specific problem in minting platform technology to improve computing operations of minting platform systems. Overall, these improvements result in less CPU computation (e.g., as a result of computing devices running excessive reverse image searches to safeguard against the inauthentic or fake NFTs corresponding to the conventional platforms), which also result in smaller memory requirements, and increased flexibility in minting platform systems when compared to previous conventional system operations performed for similar functionality.

### Example Blockchain Computing Environment

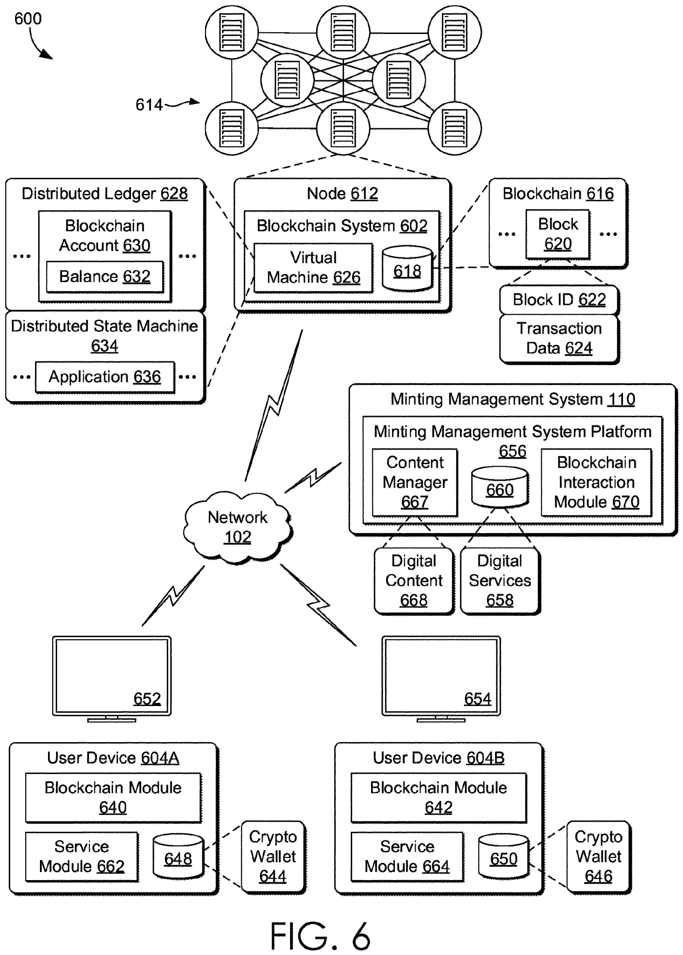

With reference to FIG. 6, example blockchain computing environment 600 illustrates an implementation in which the present disclosure may be employed. In particular, the example blockchain computing environment 600 includes a blockchain system 602, minting management system 110, a plurality of user devices (e.g., user device 604A and user device 604B) that are communicatively coupled, to one another, via a network 102. The blockchain system 602 is implemented by a plurality of nodes (e.g., node 612).

Node 612 is a runtime environment implemented using a processor, memory, and network resources of respective computing device 614 that operate as the infrastructure of the blockchain 616. A plurality of nodes store, communicate, process, and manage data that makes up the blockchain 616. The plurality of nodes are interconnected as illustrated to exchange data via the network 102.

The blockchain 616 is formed using a plurality of blocks (e.g., block 620). Block 620 includes a block identifier 622 and transaction data 624. Transaction data 624 of block 620 includes batches of validated transactions that are hashed and encoded. Each block 620 includes a cryptographic hash of a prior block in the blockchain, thereby linking the blocks to each other to form the blockchain 616. As a result, the plurality of blocks cannot be altered retroactively without altering each subsequent block in the blockchain 616 and in this way protects against attacks from malicious parties.

In order to generate the block 620 for addition to the blockchain 616, a node 612 is implemented as a "miner" to add a block of transactions to the blockchain 616. The other nodes of the blockchain system 602 then check if the block of transactions is valid, and based on this, determine whether to accept or reject this data. If valid, the block of transactions is stored - as transaction data 624 along with a block ID 622 for a respective block 620 - "at the end" or "at the top" of the blockchain 616 along with a hash of a previous block in the chain. Node 612 then broadcasts this transaction history via the network 102 for sharing with other nodes. This acts to synchronize the block 620 of the blockchain 616 across the distributed architecture of the blockchain system 602. Other types of nodes are also included as part of the blockchain system 602. In one such example, full nodes are nodes that store an entirety of the blockchain 616 - for example, locally in computer-readable storage media of a respective storage device 618. Other types of nodes are also employed to implement additional functionality to govern voting events, execution or protocol operations, and rules enforcement.

Cryptocurrencies are the native asset of the blockchain 616, and tokens are created "on top" of these blockchains. Tokens may be created "on top" of the blockchain 616 by using a "token standard" which allows the token to interoperate with the blockchain 616 network of nodes according to one or more protocols of the blockchain, such that transaction data and the hashes of the blocks are leveraged to create, trade, and update tokens. By way of example, the Ethereum blockchain's native asset is ether (ETH), a cryptocurrency. Nevertheless, tokens may be created on top of Ethereum's blockchain by using one or more of Ethereum's token standards for creating tokens, such as by using ERC-20, ERC-721, ERC-1155, and EIP-2309.

The blockchain system 602 implements a virtual machine 626 that is representative of a diverse range of functionality made possible by leveraging the blockchain 616. In a first such example, the virtual machine 626 implements a distributed ledger 628 of blockchain account 630 and associated balance 632 of the blockchain account 630. Distributed ledgers 628 support secure transfer of digital assets (e.g. tokens or coins of cryptocurrencies) between accounts 630 without management by a central authority through storage as part of the transaction data 624 of the blockchain 616. Through synchronized and distributed access supported by the blockchain 616 as described above, changes to balances 632 (e.g., a number of tokens) are visible to any entity with access to the blockchain 616. Techniques are also implemented to support management of balances 632 across the accounts 630 - for example, to enforce rules that a respective account 630 does not transfer more tokens than are available based on a balance 632 specified for that account 630.

In another example, the virtual machine 626 implements a distributed state machine 634 that supports application 636. The distributed state machine 634 is implemented along with the transaction data 624 within the blocks of the blockchain 616 such that the blocks describe accounts and balances as described above for the distributed ledger 628. The transaction data 624 also supports a machine state, which can change from block to block of the blockchain 616. In one example, the application 636 is executable as part of a "Turing-complete" decentralized virtual machine that is distributed across the nodes of the blockchain system 602. As Turing-complete, the application 636 is computationally universal to perform computing device operations, such as, logic or computing functions. The application 636 is executable by a processing system of a computing device as software that is storable in a computer-readable storage media of nodes 612 to perform a variety of operations.

An example of an application 636 that is executable as part of the distributed state machine 634 is a smart contract. A smart contract is a computer program or a transaction protocol that is intended to automatically execute, control or document events and actions according to the terms of a contract or an agreement. A smart contract is executable automatically and without user intervention (or with partial human interaction as inputs when desired) by nodes of the distributed state machine 634. Execution of the smart contract includes obtaining data from a specified data source (e.g., devices, APIs, and so forth that are accessible via the network 102), and based on this data, initiating one or more operations based on conditions described in the smart contract. In one example, the smart contract is a type of account 630 that includes a balance 632 and initiates transactions based on conditions specified by the smart contract - for example, to support automated escrow and other functionalities. A variety of other examples are also contemplated that support implementation of any executable operations by a computing device using software.

In an example of a token, the smart contracts implement non-fungible tokens (NFTs). NFTs include digital assets that are provably unique and as such cannot be duplicated or divided. As such, NFTs are not exchanged as having a same value as coins in cryptocurrency, but rather are digital assets having identifying information recorded as part of the smart contract. This identifying information is immutably recorded on that token's blockchain 616 and this ownership of the token is also recorded and tracked. A variety of information is storable as part of the digital content represented by the NFT, examples of which include digital images, digital media, digital contract, executable instructions of an application 636 as described above, secure file links, ingame tokens, digital artwork, and so forth.

By way of illustration, an NFT can correspond to an item (e.g., a physical item or digital content) and describes that item. Thus, the NFT functions to verify the item that is the subject to the transaction and as such increases value of the item through publicly verifiable ownership of the NFT. To leverage this "twinning" blockchain queries initiated by the minting management system 110 can be used to determine and verify ownership of the NFT. The data received from the blockchain queries provides the minting management system 110 with up-to-date data. This data is leveraged such that digital content 668 is exposed to the correct entity, and as such, improve the operation of the minting management system 110. Other examples of tokens are also contemplated that are fungible and as such are interchangeable with each other.

User devices (e.g., user devices 604A and 604B) can include respective blockchain modules (e.g., blockchain module 640 and blockchain module 642) that are representative of functionality of user devices to interact with the blockchain system 602. For example, this functionality includes management of respective crypto wallets (e.g., crypto wallet 644 and crypto wallet 646) in local storage devices (e.g., local storage device 648 and local storage device 650). The crypto wallets can store public and private cryptographic keys that are used to support interaction with the blockchain system 602, and particularly respective accounts of the blockchain system 602, using respective user interfaces (e.g., user interface 652, and user interface 654). Functionality of the user devices to access digital services of the minting management system 110 is represented by respective service modules. The service modules are configurable as browsers, network-enabled applications, third-party plugins, and so on to access the digital services 658 via the network 102.

A public key supports transactions to an address of an account derived from the public key, which are stored as part of the blockchain 616 to memorialize the transaction as part of transaction data 624. In one example, an address of an account is generated by first generating a private key (e.g., using a randomization technique). The corresponding public key is derived from the private key and the address of the account is then derived from the public key - for example, an entirety of the public key or as a shortened version of the public key. The private key is used to "unlock" transactions that are "locked" by the public key and gain access to the account - for example, access to coins, tokens, or other information maintained as part of the transaction.

In one example, a transaction is initiated by the user device 604A with user device 604B. Data of the transaction is encrypted using a public key. The transaction is then signed by the user device 604B using the private key which indicates that the transaction has not been modified - for example, by encrypting the data being sent in the transaction using the private key. The transaction is then verifiable as authentic by using the public key included with the data. The nodes (e.g., node 612) using the accompanying public key to automatically verify authenticity that the transaction is signed using the private key. Transactions that fail authentication are rejected by the nodes. Authentic transactions are used as part of transaction data 624 in minting blocks by the nodes that are added to the blockchain 616 as part of the distributed ledger 628. In this way, the virtual machine 626 of the blockchain system 602 supports a variety of functionality through use of the distributed ledger 628, distributed state machine 634, and other blockchain and cryptographic functionality.

The example block chain computing environment 600 also includes minting management system 110 implementing a minting management system platform 656 of digital services 658, illustrated as maintained in storage device 660 and are executable via a processing system. Digital services 658 involve electronic delivery of data and implementation of data functionality by computing devices to support a range of computing device operations. Digital services 658, for instance, include creation, management, and dissemination of digital content via the network 102 (e.g., webpages, applications, digital images, digital audio, digital video, and so forth). The digital services 658 are also implemented to control access to and transfer physical goods and services through corresponding digital content (e.g., sales, product listings, advertisements, etc.). Digital services 658 further pertain to operation of computational resources (e.g., processing, memory, and network resources) of computing devices that support the access to and management of digital content by the system.

The minting management system 110 also includes a content management system 666. The content manager 667 is configured to generate, expose, and control access to digital content 668. The digital content 668 may be controlled through use of an application (e.g., application 636) generated by the minting management system 110 and executed by the distributed state machine 634. The minting management system platform 656, for instance, includes a digital service 658 configured to support transactions of items (e.g., physical items or digital content, using service provider accounts).

The minting management system platform 656 is configured to "mint" NFTs. Minting an NFT refers to publishing a unique digital asset on a blockchain so that it can be bought, sold, and traded. To mint an NFT, the minting management system platform 656 causes the NFT to be created on the blockchain 616 and programmatically encodes an association of metadata with the NFT. In accordance with the described techniques, for example, the minting management system platform 656 is configured to mint digital twin NFTs (e.g., images of physical items, other digital content of physical items). The metadata for a digital twin NFT may include a fingerprint of the physical item (e.g., a high-resolution image of one or more features of the item, a LIDAR scan of the physical item, a unique serial number engraved on the item, etc.) and digital content of the physical item (e.g., an image of the physical item for presentation, a video of the physical item, and/or a 3D model of the physical item). The metadata may also include other information, such as a digital record of traits of the physical item, a description of the item, a condition of the physical item (which can change over time), an indication that the physical item is an authentic physical item, item authenticity and owner verification records, an indication that the physical item is not an authentic physical item, a physical location where the item was minted (e.g., at a residence, at a location corresponding to a facility of the service provider system, at an event such as a concert or sporting event, and so on), locations of transactions involving the physical item, public addresses of wallets of owners of the NFT, and/or a current location of the physical item, to name just a few. In scenarios where the metadata includes an indication that the physical item is not an authentic physical item, the physical item may be a replica or an imitation of an authentic physical item, examples of which include a print of an original painting or other artwork and a replica jersey, to name just a few. In one or more implementations, information, or portions of the information, encoded into a digital twin NFT may be based on user input to enter the information, e.g., via a user interface of the minting management system 110 in connection with listing the item.

The minting management system platform 656 may encode an association of this metadata with the digital twin NFT by, for example, encoding the actual data (e.g., the unique fingerprint and/or the digital content) in the digital twin NFT, encoding unique identifiers of the actual data in the digital twin NFT, and/or encoding one or more addresses where such data is located (e.g., a storage location) in the digital twin NFT. In operation, the minting management system platform 656 provides data as specified by a token standard associated with the blockchain 616 to one or more of the nodes to mint a new digital twin NFT of a physical item. For example, the minting management system platform 656 packages and communicates the actual metadata to be encoded and/or packages and communicates the association (e.g., identifier and/or addresses) to be encoded according to the token standard to the one or more nodes.

It is to be appreciated that the minting management system 110 may include more, fewer, and/or different components than illustrated without departing from the spirit or scope of the described techniques. Additionally, portions or entireties of one or more of the components may be implemented at client devices, such as part of applications at the client devices. For instance, at least a portion of the minting management system 110 may be implemented at the user devices as at least part of an application, as a plug-in, via a web page output (e.g., displayed) by the client devices, and so on.

### Example Computing Environment

Having briefly described an overview of embodiments of the present invention, an example operating environment in which embodiments of the present invention may be implemented is described below in order to provide a general context for various aspects of the present invention. Referring initially to FIG. 7 in particular, an example operating environment for implementing embodiments of the present invention is shown and designated generally as computing device 700. Computing device 700 is but one example of a suitable computing environment and is not intended to suggest any limitation as to the scope of use or functionality of the invention. Neither should computing device 700 be interpreted as having any dependency or requirement relating to any one or combination of components illustrated.

The invention may be described in the general context of computer code or machine-useable instructions, including computer-executable instructions such as program modules, being executed by a computer or other machine, such as a personal data assistant or other handheld device. Generally, program modules including routines, programs, objects, components, data structures, etc. refer to code that perform particular tasks or implement particular abstract data types. The invention may be practiced in a variety of system configurations, including hand-held devices, consumer electronics, general-purpose computers, more specialty computing devices, etc. The invention may also be practiced in distributed computing environments where tasks are performed by remote-processing devices that are linked through a communications network.

With reference to FIG. 7, computing device 700 includes bus 710 that directly or indirectly couples the following devices: memory 712, one or more processors 714, one or more presentation components 716, input/output ports 718, input/output components 720, and illustrative power supply 722. Bus 710 represents what may be one or more buses (such as an address bus, data bus, or combination thereof). The various blocks of FIG. 7 are shown with lines for the sake of conceptual clarity, and other arrangements of the described components and/or component functionality are also contemplated. For example, one may consider a presentation component such as a display device to be an I/O component. Also, processors have memory. We recognize that such is the nature of the art, and reiterate that the diagram of FIG. 7 is merely illustrative of an example computing device that can be used in connection with one or more embodiments of the present invention. Distinction is not made between such categories as "workstation," "server," "laptop," "hand-held device," etc., as all are contemplated within the scope of FIG. 7 and reference to "computing device."

Computing device 700 typically includes a variety of computer-readable media. Computer-readable media can be any available media that can be accessed by computing device 700 and includes both volatile and nonvolatile media, removable and non-removable media. By way of example, and not limitation, computer-readable media may comprise computer storage media and communication media.

Computer storage media include volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computing device 700. Computer storage media excludes signals per se.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory 712 includes computer storage media in the form of volatile and/or nonvolatile memory. The memory may be removable, non-removable, or a combination thereof. Exemplary hardware devices include solid-state memory, hard drives, optical-disc drives, etc. Computing device 700 includes one or more processors that read data from various entities such as memory 712 or I/O components 720. Presentation component(s) 716 present data indications to a user or other device. Exemplary presentation components include a display device, speaker, printing component, vibrating component, etc.

I/O ports 718 allow computing device 700 to be logically coupled to other devices including I/O components 720, some of which may be built in. Illustrative components include a microphone, joystick, game pad, satellite dish, scanner, printer, wireless device, etc.

### Additional Structural and Functional Features of Embodiments of the Technical Solution

Having identified various components utilized herein, it should be understood that any number of components and arrangements may be employed to achieve the desired functionality within the scope of the present disclosure. For example, the components in the embodiments depicted in the figures are shown with lines for the sake of conceptual clarity. Other arrangements of these and other components may also be implemented. For example, although some components are depicted as single components, many of the elements described herein may be implemented as discrete or distributed components or in conjunction with other components, and in any suitable combination and location. Some elements may be omitted altogether. Moreover, various functions described herein as being performed by one or more entities may be carried out by hardware, firmware, and/or software, as described below. For instance, various functions may be carried out by a processor executing instructions stored in memory. As such, other arrangements and elements (e.g., machines, interfaces, functions, orders, and groupings of functions) can be used in addition to or instead of those shown.

Embodiments described in the paragraphs below may be combined with one or more of the specifically described alternatives. In particular, an embodiment that is claimed may contain a reference, in the alternative, to more than one other embodiment. The embodiment that is claimed may specify a further limitation of the subject matter claimed.

The subject matter of embodiments of the invention is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

For purposes of this disclosure, the word "including" has the same broad meaning as the word "comprising," and the word "accessing" comprises "receiving," "referencing," or "retrieving." Further, the word "communicating" has the same broad meaning as the word "receiving," or "transmitting" facilitated by software or hardware-based buses, receivers, or transmitters using communication media described herein. In addition, words such as "a" and "an," unless otherwise indicated to the contrary, include the plural as well as the singular. Thus, for example, the constraint of "a feature" is satisfied where one or more features are present. Also, the term "or" includes the conjunctive, the disjunctive, and both (*a* or *b* thus includes either *a* or *b,* as well as *a* and *b*).

For purposes of a detailed discussion above, embodiments of the present invention are described with reference to a distributed computing environment; however, the distributed computing environment depicted herein is merely exemplary. Components can be configured for performing novel aspects of embodiments, where the term "configured for" can refer to "programmed to" perform particular tasks or implement particular abstract data types using code. Further, while embodiments of the present invention may generally refer to the technical solution environment and the schematics described herein, it is understood that the techniques described may be extended to other implementation contexts.

Embodiments of the present invention have been described in relation to particular embodiments that are intended in all respects to be illustrative rather than restrictive. Alternative embodiments will become apparent to those of ordinary skill in the art to which the present invention pertains without departing from its scope.

From the foregoing, it will be seen that this invention is one well adapted to attain all the ends and objects hereinabove set forth together with other advantages which are obvious and which are inherent to the structure.

It will be understood that certain features and sub-combinations are of utility and may be employed without reference to other features or sub-combinations. This is contemplated by and is within the scope of the claims.

Some example aspects that can be practiced from the forgoing description include:
Aspect 1: a computer-implemented method comprising: receiving a request from a user device to mint an NFT; identifying a public blockchain address based on the request to mint the NFT; verifying a location of the user device based on location verification data received by a location verification device, the location verification data being associated with at least one signal received by the location verification device from the user device, the location of the user device and a location of the location verification device each corresponding to the request to mint the NFT; and minting the NFT based on the public blockchain address and based on verifying the location of the user device.
Aspect 2: Aspect 1, wherein the location verification device is included within a plurality of location verification devices including a plurality of beacons affixed to one or more structures at a plurality of physical locations, each of the plurality of beacons being within a threshold distance from at least one other beacon of the plurality of beacons, and wherein the computer-implemented method further comprises verifying the location of the user device based on receiving the location verification data from a threshold number of the plurality of beacons.
Aspect 3: Aspect 1 or 2, wherein the NFT is minted based on the location of the user device relative to the location verification device.
Aspect 4: Aspects 1, 2, or 3, wherein the NFT includes an image captured by at least one image sensor of the user device, and wherein the computer-implemented method further comprises: verifying the image was captured by the user device based on metadata of the image; verifying that the image includes a background corresponding to the location of the location verification device based on a plurality of images captured at the location of the location verification device; and minting the NFT based on verifying the image was captured by the user device and verifying that the image includes a background corresponding to the location of the location verification device.
Aspect 5: Aspects 1, 2, 3, or 4, wherein the plurality of images captured at the location of the location verification device were captured by other user devices, and wherein each of the plurality of images were verified based on metadata of each of the plurality of images.
Aspect 6: Aspects 1, 2, 3, 4 or 5, wherein the location verification device is included within a plurality of location verification devices including a beacon affixed to a structure and a base station, and wherein the computer-implemented method further comprises verifying the location of the user device based on receiving the location verification data from the beacon and the base station.
Aspect 7: Aspects 1, 2, 3, 4, 5, or 6, wherein verifying the location of the user device is based on one or more base station processors performing a triangulation technique based on a location of the base station.
Aspect 8: Aspects 1, 2, 3, 4, 5, 6, or 7, wherein the request includes image data and an event identifier associated with an event and an event location, and wherein the computer-implemented method further comprises verifying the location of the user device based on the user device being within a threshold distance of the event location and based on metadata of the image data being within a duration of the event.
Aspect 9: Aspects 1, 2, 3, 4, 5, 6, 7, or 8, wherein the location verification device includes a motion sensor having an infrared sensor and signal processor, wherein the location verification data includes user device accelerometer data, and wherein verifying the location of the user device includes processing, via one or more movement algorithms, the user device accelerometer data and movement data detected by the infrared sensor that was processed by the signal processor.
Aspect 10: one or more computer-storage media having computer-executable instructions embodied thereon that, when executed by a computing system having a processor and memory, cause the processor to perform operations, the operations comprising: receiving a request from a user device to mint an NFT; identifying a public blockchain address based on the request to mint the NFT; verifying a location of the user device based on the request and location verification data received by a location verification device that is affixed to a structure, the location verification data being associated with at least one signal received by the location verification device from the user device, the location of the user device being within a threshold distance of a location of the location verification device affixed to the structure; and causing the NFT to be minted based on the public blockchain address and based on verifying the location of the user device.
Aspect 11: Aspect 10, wherein the location verification device is included within a plurality of location verification devices including a plurality of beacons that are each affixed to a different structure at different physical locations, each of the plurality of beacons being within a threshold distance from at least one other beacon of the plurality of beacons, and wherein the location of the user device is verified based on each of the plurality of beacons receiving the location verification data from the user device.
Aspect 12: Aspects 10 or 11, wherein the NFT includes image data captured by the user device, and wherein the operations further comprise: verifying the image data was captured by the user device based on metadata of the image data; and minting the NFT including the image data based on verifying the image data was captured by the user device.
Aspect 13: Aspects 10, 11, or 12, wherein verifying the image data was captured by the user device further includes comparing the image data corresponding to a background with other image data of the background captured by other user devices, wherein the location verification device verified locations of the other user devices, the verifications of the other user devices associated with the other image data.
Aspect 14: Aspects 10, 11, 12, or 13, wherein the request includes an event identifier associated with an event and an event location, wherein the location verification device is included within a plurality of location verification devices including a beacon and a small cell having a location within the event location, and wherein the location of the user device is verified based on the small cell performing an indoor positioning technique.
Aspect 15: a computerized system comprising: one or more computer processors; and computer storage media storing computer-useable instructions that, when used by the one or more computer processors, cause the one or more computer processors to perform operations, the operations comprising: receiving a request from a user device to mint an NFT, the request including an event identifier associated with an event and an event location; identifying a public blockchain address based on the request to mint the NFT; verifying a location of the user device based on location verification data received by a location verification device, the location verification data being associated with at least one signal received by the location verification device from the user device, the location of the user device and a location of the location verification device each corresponding to the event location; and minting the NFT based on the public blockchain address and based on verifying the location of the user device.
Aspect 16: Aspect 15, wherein the NFT corresponds to image data captured by the user device, and wherein the location of the user device is verified based on metadata of the image data being within a duration of the event.
Aspect 17: Aspects 15 or 16, wherein the location verification device includes a motion sensor having an infrared sensor, and wherein the location of the user device is verified based on movement data of a user of the user device detected by the infrared sensor.
Aspect 18: Aspects 15, 16, or 17, wherein verifying the location of the user device is based on the user device registering with a computer application using a media access control (MAC) address of the user device and the public blockchain address.
Aspect 19: Aspects 15, 16, 17, or 18, wherein the NFT corresponds to image data captured by the user device, and wherein the location of the user device is verified based on metadata of the image data being within a duration of the event.
Aspect 20: Aspects 15, 16, 17, 18, or 19, wherein the location verification device is included within a plurality of location verification devices that also include a base station, and wherein verifying the location of the user device is based on positioning techniques performed by the base station.

## Claims

1. A computer-implemented method comprising:
receiving a request from a user device to mint an NFT;
identifying a public blockchain address based on the request to mint the NFT;
verifying a location of the user device based on location verification data received by a location verification device, the location verification data being associated with at least one signal received by the location verification device from the user device, the location of the user device and a location of the location verification device each corresponding to the request to mint the NFT; and
minting the NFT based on the public blockchain address and based on verifying the location of the user device.

2. The computer-implemented method of claim 1, wherein the location verification device is included within a plurality of location verification devices including a plurality of beacons affixed to one or more structures at a plurality of physical locations, each of the plurality of beacons being within a threshold distance from at least one other beacon of the plurality of beacons, and wherein the computer-implemented method further comprises verifying the location of the user device based on receiving the location verification data from a threshold number of the plurality of beacons;
wherein the NFT may be minted based on the location of the user device relative to the location verification device.

3. The computer-implemented method of claim 1 or 2, wherein the NFT includes an image captured by at least one image sensor of the user device, and wherein the computer-implemented method further comprises:
verifying the image was captured by the user device based on metadata of the image;
verifying that the image includes a background corresponding to the location of the location verification device based on a plurality of images captured at the location of the location verification device; and
minting the NFT based on verifying the image was captured by the user device and verifying that the image includes a background corresponding to the location of the location verification device.

4. The computer-implemented method of claim 3, wherein the plurality of images captured at the location of the location verification device were captured by other user devices, and wherein each of the plurality of images were verified based on metadata of each of the plurality of images.

5. The computer-implemented method of any one of the preceding claims, wherein the location verification device is included within a plurality of location verification devices including a beacon affixed to a structure and a base station, and wherein the computer-implemented method further comprises verifying the location of the user device based on receiving the location verification data from the beacon and the base station;
wherein verifying the location of the user device may be based on one or more base station processors performing a triangulation technique based on a location of the base station.

6. The computer-implemented method of any one of the preceding claims, wherein the request includes image data and an event identifier associated with an event and an event location, and wherein the computer-implemented method further comprises verifying the location of the user device based on the user device being within a threshold distance of the event location and based on metadata of the image data being within a duration of the event.

7. The computer-implemented method of any one of the preceding claims, wherein the location verification device includes a motion sensor having an infrared sensor and signal processor, wherein the location verification data includes user device accelerometer data, and wherein verifying the location of the user device includes processing, via one or more movement algorithms, the user device accelerometer data and movement data detected by the infrared sensor that was processed by the signal processor.

8. One or more computer-storage media having computer-executable instructions embodied thereon that, when executed by a computing system having a processor and memory, cause the processor to perform operations, the operations comprising:
receiving a request from a user device to mint an NFT;
identifying a public blockchain address based on the request to mint the NFT;
verifying a location of the user device based on the request and location verification data received by a location verification device that is affixed to a structure, the location verification data being associated with at least one signal received by the location verification device from the user device, the location of the user device being within a threshold distance of a location of the location verification device affixed to the structure; and
causing the NFT to be minted based on the public blockchain address and based on verifying the location of the user device.

9. The one or more computer-storage media of claim 8, wherein the location verification device is included within a plurality of location verification devices including a plurality of beacons that are each affixed to a different structure at different physical locations, each of the plurality of beacons being within a threshold distance from at least one other beacon of the plurality of beacons, and wherein the location of the user device is verified based on each of the plurality of beacons receiving the location verification data from the user device.

10. The one or more computer-storage media of claim 8 or 9, wherein the NFT includes image data captured by the user device, and wherein the operations further comprise:
verifying the image data was captured by the user device based on metadata of the image data; and
minting the NFT including the image data based on verifying the image data was captured by the user device;
wherein verifying the image data was captured by the user device may further include comparing the image data corresponding to a background with other image data of the background captured by other user devices, wherein the location verification device may have verified locations of the other user devices, the verifications of the other user devices optionally being associated with the other image data.

11. The one or more computer-storage media of any one of claims 8 to 10, wherein the request includes an event identifier associated with an event and an event location, wherein the location verification device is included within a plurality of location verification devices including a beacon and a small cell having a location within the event location, and wherein the location of the user device is verified based on the small cell performing an indoor positioning technique.

12. A computerized system comprising:
one or more computer processors; and
computer storage media storing computer-useable instructions that, when used by the one or more computer processors, cause the one or more computer processors to perform operations, the operations comprising:
receiving a request from a user device to mint an NFT, the request including an event identifier associated with an event and an event location;
identifying a public blockchain address based on the request to mint the NFT;
verifying a location of the user device based on location verification data received by a location verification device, the location verification data being associated with at least one signal received by the location verification device from the user device, the location of the user device and a location of the location verification device each corresponding to the event location; and
minting the NFT based on the public blockchain address and based on verifying the location of the user device.

13. The computerized system of claim 12, wherein the NFT corresponds to image data captured by the user device, and wherein the location of the user device is verified based on metadata of the image data being within a duration of the event.

14. The computerized system of claim 12 or 13, wherein the location verification device includes a motion sensor having an infrared sensor, and wherein the location of the user device is verified based on movement data of a user of the user device detected by the infrared sensor, wherein verifying the location of the user device may be based on the user device registering with a computer application using a media access control (MAC) address of the user device and the public blockchain address.

15. The computerized system of any one of claims 12 to 14, wherein the location verification device is included within a plurality of location verification devices that also include a base station, and wherein verifying the location of the user device is based on positioning techniques performed by the base station.
